# EUROPÄISCHE PATENTSCHRIFT

(11) **EP 1 614 888 B1**
(45) Veröffentlichungstag und Bekanntmachung des Hinweises auf die Patenterteilung: **15.08.2012**
(21) Anmeldenummer: 05450103.6
(22) Anmeldetag: 09.06.2005
(51) Int. Cl.: F02M 35/116, F02B 27/02

(54) **Brennkraftmaschine**
Internal combustion engine
Moteur à combustion interne

(30) Priorität: 09.07.2004 AT 11692004
(43) Veröffentlichungstag der Anmeldung: 11.01.2006
(73) Patentinhaber: AVL List GmbH, 8020 Graz (AT)
(72) Erfinder: Kapus, Paul, Dr., 8111 Judendorf (AT)
(74) Vertreter: Babeluk, Michael

(56) Entgegenhaltungen:
- DE-A1- 3 420 703
- DE-A1- 3 728 179
- GB-A- 2 134 980
- GB-A- 2 252 791
- US-A- 4 664 075
- US-A- 4 817 569
- US-A- 5 027 769
- US-A- 5 133 308

## Beschreibung

Die Erfindung betrifft eine Brennkraftmaschine mit zumindest zwei Gruppen von Zylindern, mit einem Einlasssystem mit zumindest einem in einen Einlasssammler mündenden Vorrohr, wobei jeder Zylinder über zumindest ein Einlassrohr mit einem für mehrere Zylinder gemeinsamen Einlasssammler verbunden ist, wobei das Einlassrohr einen einlasssammlerseitigen Eintritt aufweist, wobei der Strömungsweg innerhalb des Einlasssammlers zwischen der Mündung des Vorrohres und dem Eintritt in das Einlassrohr für jedes Einlassrohr gleich ausgebildet ist, wobei das Vorrohr symmetrisch zu den Eintritten im Bereich einer den Zylindern zugewandten Unterseite oder einer Längsseite oder Stirnseite in den Einlasssammler einmündet, wobei die Eintritte von zumindest drei Einlassrohren entlang einer Kreislinie angeordnet sind, wobei die Mündung des Vorrohres zentral in Bezug auf die Eintritte, im Bereich des Mittelpunktes der Kreislinie innerhalb des Einlasssammlers angeordnet ist, wobei für jede Gruppe von Zylindern ein Einlasssammler vorgesehen ist.

Aus der DE 38 18 099 A1 oder der GB 631 659 A ist eine Brennkraftmaschine mit einem Einlasssammler bekannt, in welchen von oben - von einem Vergaser kommend - ein Vorrohr einmündet. Die Eintritte von zu den einzelnen Zylindern führenden Einlassrohren sind so angeordnet, dass die Strömungswege etwa gleich sind. Dadurch werden gleiche Zylinderfüllungen gewährleistet. Dadurch, dass das Vorrohr allerdings von oben in den Einlasssammler einmündet, ist relativ viel Brennraum nötig.

Bei Brennkraftmaschinen mit V-förmig angeordneten Zylindern wird im Allgemeinen eine Kombination aus gutem Drehmoment-, Leistungs- und Akustikverhalten angestrebt. Gute Volllastwerte lassen sich dabei durch ein schaltbares Einlasssystem erzielen, wobei zwischen zwei Ansaugströmungslängen umgeschaltet werden kann. Derartige Einlasssysteme sind beispielsweise aus der US 2004/0099235 A2 oder der JP 2002-242681 A2 oder der US 5,515,822 A bekannt. Bei Schaltsaugrohrsystemen lässt sich allerdings schwer eine symmetrische Ansauggeometrie verwirklichen, da eine Vorrohrschwingung insbesondere für einen V-Motor vorteilhaft ist. Ist der Abstand zwischen der Mündung des Vorrohres in den Einlasssammler und dem Eintritt in die Einlassrohre nicht gleich, so kommt es allerdings zu einer Schwingung 1,5ter Ordnung, die akustisch unerwünscht ist.

Die US 4,664,075 A beschreibt eine Brennkraftmaschine mit zwei Gruppen von Zylindern, wobei jeder Zylindergruppe ein Einlasssammler zugeordnet ist. Der Einlasssammler ist dabei jeweils mit einer zentralen Zustromöffnung ausgebildet, wobei von jedem Einlasssammler zu den Zylindern führende Einlassrohre ausgehen. Die Eintritte der Einlassrohre sind entlang einer Kreislinie im Einlasssammler angeordnet.

Aus der US 5,027,769 A ist eine Brennkraftmaschine mit mehreren Zylindern bekannt, wobei zu jedem Zylinder jeweils ein Niedriggeschwindigkeits-Einlasskanal und ein Hochgeschwindigkeits-Einlasskanal führen. Die Niedriggeschwindigkeits-Einlasskanäle sind mit einem ersten Einlasssammler und die Hochgeschwindigkeits-Einlasskanäle mit einem zweiten Einlasssammler verbunden. Die beiden Einlasssammler sind in einer Ausführungsvariante durch eine Trennwand getrennt, in welcher eine durch eine Klappe verschließbare Strömungsverbindung angeordnet ist.

Die US 5,133,308 A offenbart ein Einlasssystem für eine Brennkraftmaschine mit V-förmig angeordneten Zylinderbänken, zwischen welchen ein Einlasssammler angeordnet ist. Im Bereich einer Stirnseite mündet ein Vorrohr in den Einlasssammler ein. Der Einlasssammler ist jeweils über ein Einlassrohr mit einem Zylinder verbunden, wobei die Strömungswege zwischen dem Einlasssammler und den Zylindern im Wesentlichen gleich lange ausgebildet sind.

Aufgabe der Erfindung ist es, diese Nachteile zu vermeiden und bei einer Brennkraftmaschine mit mehreren Gruppen von Zylindern sowohl gutes Drehmoment-und Leistungsverhalten, als auch eine gute Ansaugakustik zu erreichen. Eine weitere Aufgabe ist es, den nötigen Bauraum so gering wie möglich zu halten.

Erfindungsgemäß wird dies dadurch erreicht, dass in jeden Einlasssammler ein Vorrohr einmündet, und dass die Vorrohre verschiedener Einlasssammler mittels einer durch eine Klappe gebildeten Akustikschalteinrichtung verbindbar sind, wobei die Akustikschalteinrichtung vor dem Eintritt in die Einlasssammler im Bereich der Vorrohre angeordnet ist.

Mit dem Akustikschaltorgan kann zwischen 1,5ter Ordnung und 3ter Ordnung umgeschaltet werden. Zusätzlich ist eine Trennung der Zylinderbänke zu Diagnose- und Adaptionszwecken möglich.

Dadurch kann eine besonders gute Akustik und ein gutes Drehmoment- und Leistungsverhalten erreicht werden. Dadurch lässt sich eine symmetrische Ansauggeometrie erzielen, wodurch ungewünschte Akustikschwingungen 1,5ter Ordnung weitgehend vermieden werden können. Der Abstand der Einlassrohre innerhalb des Einlasssammlers von der Mündung des Vorrohres ist annähernd konstant.

In einer vorteilhaften Ausführung der Erfindung ist vorgesehen, dass der Sammelraum zumindest in einen oberen und einen unteren Teilraum geteilt ist, wobei die Teilräume mittels eines Schaltorgans miteinander verbindbar sind, wobei vorzugsweise pro Zylinder von jedem Teilraum zumindest ein zum Zylinder führendes Einlassrohr ausgeht. Dabei münden beispielsweise bei einem V6-Motor jeweils drei Saugrohre in den oberen und drei Saugrohre in den unteren Teilraum. Die getrennten Vorrohre werden vor der Drosselklappe wieder zusammengeführt, damit sich die entstandene Vorrohrschwingung, welche für das Drehmoment wichtig ist, akustisch bis zur Mündung vor dem Luftfilter wieder auslöscht.

Alle Einlassrohre können dabei von einer Seite des Einlasssammlers ausgehen. Alternativ dazu können die Eintritte der Einlassrohre hinsichtlich einer Längsebene des Einlasssammlers etwa symmetrisch angeordnet sein.

In Weiterführung der Erfindung kann vorgesehen sein, dass für jede Gruppe von Zylindern ein Einlasssammler vorgesehen ist, wobei in jeden Einlasssammler ein Vorrohr einmündet. Die beiden Einlasssammler sind dabei symmetrisch zu einer die Kurbelwelle der Brennkraftmaschine beinhaltenden Motorhochebene angeordnet.

Im Rahmen der Erfindung kann weiters vorgesehen sein, dass zumindest ein Eintrittsrohr jedes Zylinders zwischen zumindest zwei Ansauglängen umschaltbar ist.

Gute Ergebnisse hinsichtlich dem Drehmoment-, Leistungs- und Akustikverhalten lassen sich erzielen, wenn der Einlasssammler bezüglich zumindest einer Ebene im Wesentlichen symmetrisch ausgebildet ist.

Die Erfindung wird im Folgenden anhand der Figuren näher erläutert. Es zeigen
- Fig. 1: ein Einlasssystem einer erfindungsgemäßen Brennkraftmaschine in einer ersten Ausführungsvariante in einem Schnitt gemäß der Linie I-I in Fig. 1a;
- Fig. 1a: das Einlasssystem in einem Schnitt gemäß der Linie Ia-Ia in Fig. 1;
- Fig. 2: ein Einlasssystem einer erfindungsgemäßen Brennkraftmaschine in einer zweiten Ausführungsvariante;
- Fig. 3: ein Vorrohr in einem Schnitt gemäß der Linie III-III in Fig. 2;
- Fig.4: den Einlasssammler in einem Schnitt gemäß der Linie IV-IV in Fig. 2 in einer dritten Ausführungsvariante;
- Fig. 5: einen Einlasssammler in einem Schnitt analog zur Fig. 4 in einer vierten Ausführungsvariante;
- Fig. 6: ein Einlasssystem einer erfindungsgemäßen Brennkraftmaschine in einer fünften Ausführungsvariante in einer Draufsicht;
- Fig. 7: dieses Einlasssystem in einer Vorderansicht;
- Fig. 8: ein Einlasssystem einer erfindungsgemäßen Brennkraftmaschine in einer sechsten Ausführungsvariante im Grundriss; und
- Fig. 9: dieses Einlasssystem in einem Schnitt durch den Einlasssammler gemäß der Linie IX-IX in Fig. 8;
- Fig. 9a: Details, die den Aufbau der Ausführungsvariante besser erklären; und
- Fig. 9b: Details, die den Aufbau der Ausführungsvariante besser erklären.

Funktionsgleiche Teile sind in den Ausführungsvarianten mit gleichen Bezugszeichen versehen.

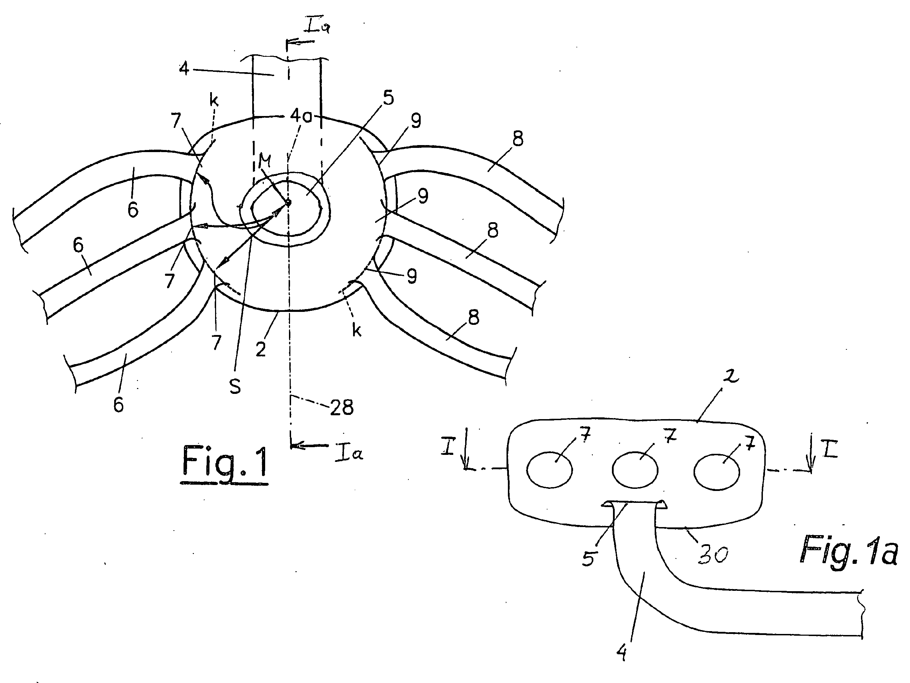

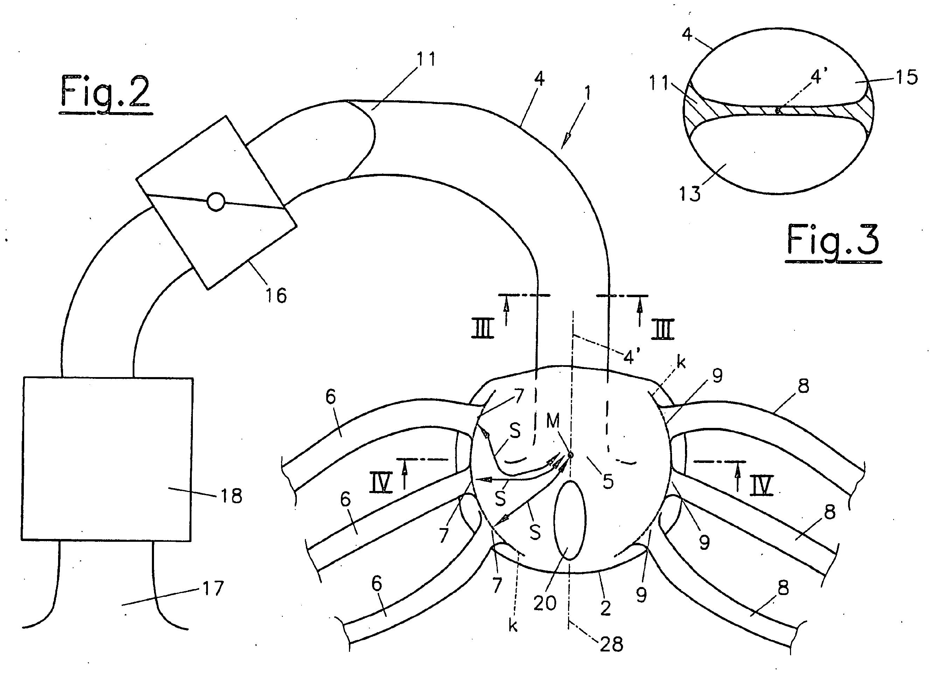

Die in den Figuren abgebildeten Einlasssysteme 1 für Brennkraftmaschinen mit zwei Gruppen von Zylindern, insbesondere für V-Motoren, weist zumindest einen Einlasssammler 2 auf, in welchen ein Vorrohr 4 im Bereich einer dem Motor zugewandten Unterseite 30 oder im Bereich einer Längsseite 31 oder Stirnseite einmündet. Vom Einlasssammler 2 geht pro Zylinder mindestens ein Einlassrohr 6, 8 aus. Die Mündung 5 des Vorrohres 4 ist im Einlasssammler 2 so angeordnet, dass die Strömungswege zwischen der Mündung 5 und den Eintritten 7, 9 in jedes Einlassrohr 6, 8 gleich lang sind, wie durch die Pfeile S in den Figuren 1 und 2 angedeutet ist. Dadurch lassen sich gute Akustikwerte erreichen und insbesondere Schwingungen 1,5-ter ausschalten.

Fig. 2 zeigt eine Ausführungsvariante, bei der der Eintrittssammler 2 durch eine im Wesentlichen normal zu einer Motorhochachse verlaufenden Trennwand 10 in einen unteren und einen oberen Teilraum 12, 14 unterteilt ist. Die Trennwand 10 setzt sich dabei in einer Trennwand 11 im Vorrohr 4 fort, so dass auch das Vorrohr 4 in einen unteren und einen oberen Teilraum 13, 15 unterteilt ist, wie aus Fig. 3 zu entnehmen ist. Die Trennwand 11 im Vorrohr 4 beginnt dabei stromabwärts einer Drosselklappe 16. Die getrennten Teilräume 13, 15 werden somit stromabwärts der Drosselklappe 16 zusammengeführt, wodurch sich eine entstehende Vorrohrschwingung, welche zur Ausbildung eines hohen Drehmomentes günstig ist, akustisch bis zum Eintritt 17 in das Vorrohr 4 vor dem Luftfilter 18 wieder ausgelöscht wird.

Durch die Trennwände 10, 11 kann das Einlasssystem 1 einer V-Brennkraftmaschine akustisch in zwei Reihen-Brennkraftmaschinen getrennt werden. Eine 6-Zylinder-V-Brennkraftmaschine kann somit durch die Trennwände 10, 11 in zwei 3-Zylinder-Brennkraftmaschinen geteilt werden. In der Trennwand 10 des Einlasssammlers 2 ist dabei ein Schaltorgan 20 angeordnet, mit welcher unterer und oberer Teilraum 12, 14 wahlweise strömungsverbunden oder getrennt werden können. Durch das Schaltorgan 20 kann der Abstandsunterschied aller Zylinder zwischen der Mündung des Vorrohres 4 und den Eintritten 7, 9 der Einlassrohre 6, 8 minimiert werden.

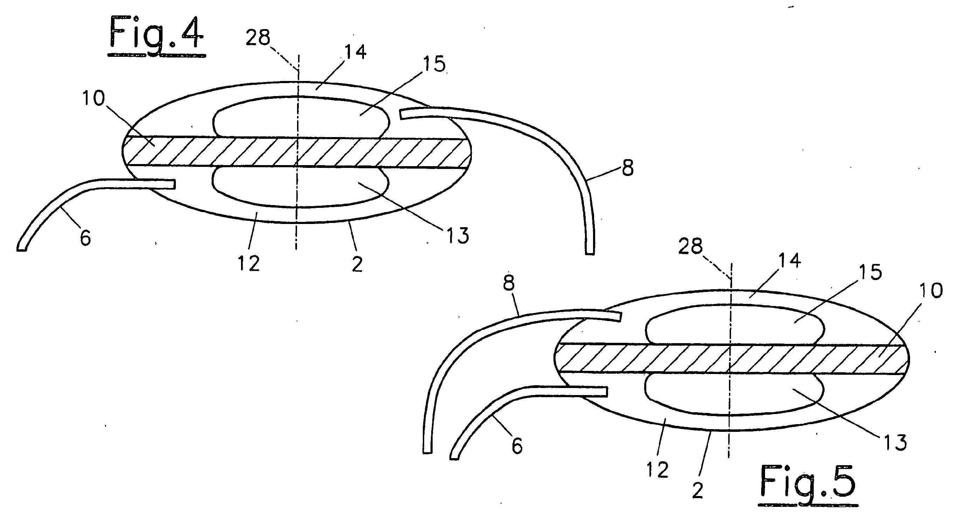

Wie in den Figuren 4 und 5 erkennbar ist, können dabei die Einlassrohre 6, 8 von den verschiedenen Teilräumen 12, 14 von unterschiedlichen Seiten (Fig. 4) oder von der gleichen Seite (Fig. 5) ausgehen.

Durch die gleiche Strömungslänge zwischen der Mündung 5 des Vorrohres 4 und den Eintritten 7, 9 der Einlassrohre 6, 8 tritt im Bereich des Eintrittes 17 vorwiegend eine akustische Schwingung dritter Ordnung auf, welche zur Ausbildung eines guten Akustikverhaltens erwünscht ist.

Gleiche Strömungswege können insbesondere dann erreicht werden, wenn - im Grundriss betrachtet - die Eintritte 7, 9 in die Einlassrohre 6, 8 entlang einer Kreislinie k angeordnet sind, wobei die Mittelachse 4' des Vorrohres 4 im Wesentlichen durch den Mittelpunkt M des Kreises k verläuft. Voraussetzung dafür ist allerdings, dass keine Strömungshindernisse vorliegen, die die Länge der Strömungswege unterschiedlich beeinflussen. Der Einlasssammler 2 hat dadurch eine im Wesentlichen symmetrische Form, wobei die Symmetrieebene 28 durch die Motorhochachse und die Mittelachse 4' im Bereich der Mündung 5 des Vorrohres 4 verläuft.

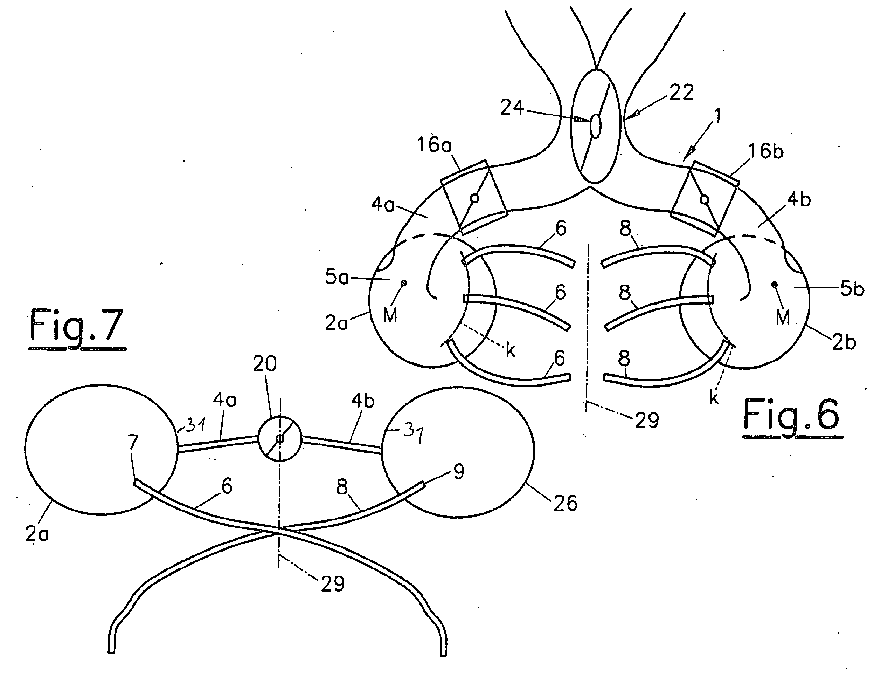

Die Figuren 6 und 7 zeigen eine Ausführungsvariante eines Einlasssystems 1 mit zwei getrennten Einlasssammlern 2a, 2b, wobei jeder Einlasssammler 2a, 2b einer Gruppe von Einlassrohren 6, 8 zugeordnet ist. In jeden Einlasssammler 2a, 2b mündet ein eigenes Vorrohr 4a, 4b ein, wobei in jedem Vorrohr 4a, 4b eine Drosselklappe 16a, 16b angeordnet ist. Die Vorrohre 4a, 4b sind dabei miteinander verbunden, wobei im Bereich der Verbindung 22 ein durch eine Klappe gebildetes Akustikschaltorgan 24 angeordnet ist, mit welchem ein Umschalten zwischen 1,5-ter und dritter Ordnung möglich ist. Zusätzlich ist eine Trennung der Zylinderbänke zur Diagnose- und Adoptionszwecken möglich, insbesondere wenn zwei Luftmassenmesser eingesetzt werden.

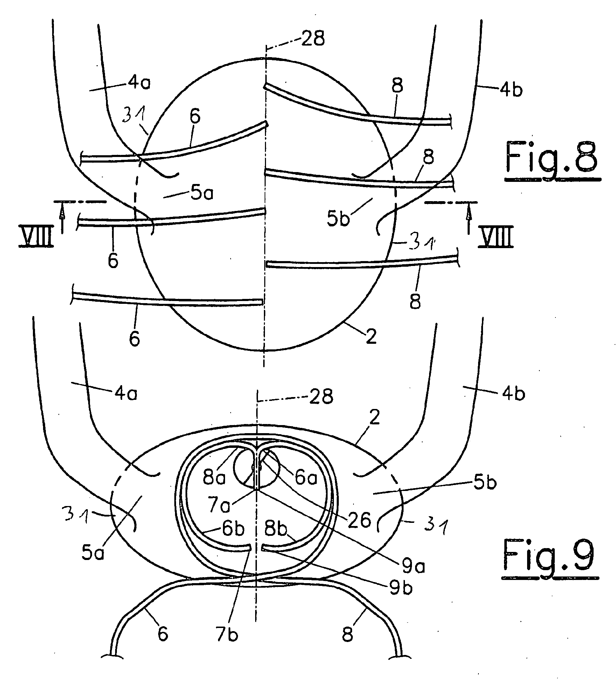

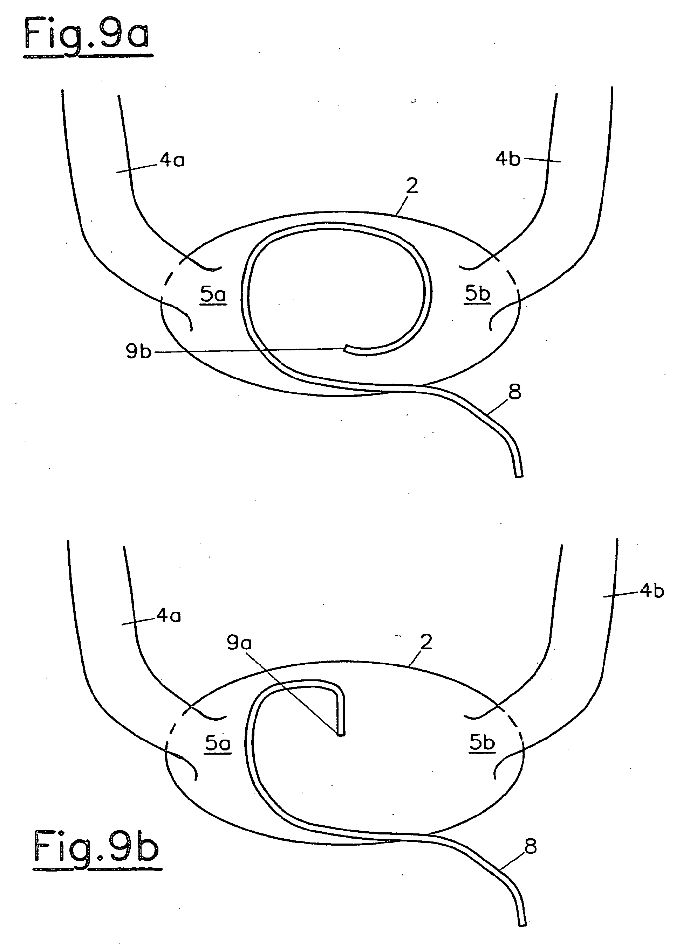

Die Figuren 8 und 9 zeigen eine weitere Ausführungsvariante mit längenverstellbaren Einlassrohren 6, 8. Jedem Einlassrohr 6, 8 ist dabei ein kurzer und ein langer Strömungsweg 6a, 6b; 8a, 8b zugeordnet, wobei zwischen kurzem und langem Strömungsweg mittels eines Umschaltorgans 26 umgeschaltet werden kann. Dabei münden zwei Vorrohre 4a, 4b in den Einlasssammler 2 ein. Die Eintritte 7a, 7b; 9a, 9b sind annähernd im Bereich der die Kurbelwelle beinhaltenden Motorhochebene 28 angeordnet. Auch hier sind die Strömungswege zwischen den Mündungen 5a, 5b und den Eintritten 7b, 9b bzw. 7a, 9a im Wesentlichen gleich. Das Einlasssystem 1 weist auch hier eine im Wesentlichen symmetrische Ansauggeometrie auf.

In Fig. 9a ist das Einlassrohr 8 in der lang geschalteten Stellung herausgezeichnet. Es ist ersichtlich, dass die Öffnung des Eintritts 9b im Wesentlichen den gleichen Abstand zu den Mündungen 5a, 5b aufweist.

Analog zeigt Fig. 9 das Einlassrohr 8 in der kurz geschalteten Stellung. Auch hier hat die Öffnung des Eintritts 9a im Wesentlichen den gleichen Abstand zu den Mündungen 5a, 5b.

## Patentansprüche

1. Brennkraftmaschine mit zumindest zwei Gruppen von Zylindern, mit einem Einlasssystem (1) mit zumindest einem in einen Einlasssammler (2; 2a, 2b) mündenden Vorrohr (4; 4a, 4b), wobei jeder Zylinder über zumindest ein Einlassrohr (6, 8; 6a, 6b; 8a, 8b) mit einem für mehrere Zylinder gemeinsamen Einlasssammler (2; 2a, 2b) verbunden ist, wobei das Einlassrohr (6, 8; 6a, 6b; 8a, 8b) einen einlasssammlerseitigen Eintritt (7, 9; 7a, 7b; 9a, 9b) aufweist, wobei der Strömungsweg innerhalb des Einlasssammlers (2; 2a, 2b) zwischen der Mündung (5; 5a, 5b) des Vorrohres (4; 4a, 4b) und dem Eintritt (7, 9; 7a, 7b; 9a, 9b) in das Einlassrohr (6, 8; 6a, 6b; 8a, 8b) für jedes Einlassrohr (6, 8; 6a, 6b; 8a, 8b) gleich ausgebildet ist, wobei das Vorrohr (4; 4a, 4b) symmetrisch zu den Eintritten (7, 9; 7a, 7b; 9a, 9b) im Bereich einer den Zylindern zugewandten Unterseite (30) oder einer Längsseite (31) oder Stirnseite in den Einlasssammler (2; 2a, 2b) einmündet, wobei die Eintritte (7, 9; 7a, 7b; 9a, 9b) zumindest von drei Einlassrohren (6, 8; 6a, 6b; 8a, 8b) entlang einer Kreislinie (k) angeordnet sind, wobei die Mündung (5; 5a, 5b) des Vorrohres (4; 4a, 4b) zentral in Bezug auf die Eintritte (7, 9; 7a, 7b; 9a, 9b) im Bereich des Mittelpunktes (M) der Kreislinie (k) innerhalb des Einlasssammlers (2; 2a, 2b) angeordnet ist, wobei für jede Gruppe von Zylindern ein Einlasssammler (2a, 2b) vorgesehen ist, **dadurch gekennzeichnet, dass** in jeden Einlasssammler (2a, 2b) ein Vorrohr (4a, 4b) einmündet, und dass die Vorrohre (4a, 4b) verschiedener Einlasssammler (2a, 2b) mittels einer durch eine Klappe gebildeten Akustikschalteinrichtung (24) verbindbar sind, wobei die Akustikschalteinrichtung (24) vor dem Eintritt in die Einlasssammler (2a, 2b) im Bereich der Vorrohre (4a, 4b) angeordnet ist.

2. Brennkraftmaschine nach Anspruch 1, **dadurch gekennzeichnet, dass** der Sammelraum des Einlasssammlers (2; 2a, 2b) zumindest in einen oberen und einen unteren Teilraum (12, 14) geteilt ist, wobei die Teilräume (12, 14) mittels zumindest eines Schaltorgans (20) miteinander verbindbar sind.

3. Brennkraftmaschine nach Anspruch 2, **dadurch gekennzeichnet, dass** pro Zylinder von jedem Teilraum (12, 14) zumindest ein zum Zylinder führendes Einlassrohr (6, 8; 6a, 6b; 8a, 8b) ausgeht.

4. Brennkraftmaschine nach einem der Ansprüche 1 bis 3, **dadurch gekennzeichnet, dass** auch das Vorrohr (4; 4a, 4b) durch zumindest eine Trennwand (11) in zumindest zwei Ansaugteilräume (13, 15) entsprechend der Teilung des Einlasssammlers (2; 2a, 2b) unterteilt ist, wobei sich die Trennwand (11) des Vorrohres (4; 4a, 4b) in der Trennwand (11) des Einlasssammlers (2; 2a, 2b) fortsetzt.

5. Brennkraftmaschine nach einem der Ansprüche 1 bis 4, **dadurch gekennzeichnet, dass** zumindest ein Einlassrohr (6, 8; 6a, 6b; 8a, 8b) jedes Zylinders zwischen zumindest zwei Ansauglängen umschaltbar ist.

6. Brennkraftmaschine nach einem der Ansprüche 1 bis 5, **dadurch gekennzeichnet, dass** der Einlasssammler (2; 2a, 2b) bezüglich zumindest einer Ebene (28) symmetrisch ausgebildet ist.

7. Brennkraftmaschine nach einem der Ansprüche 1 bis 6, **dadurch gekennzeichnet, dass** die Einlassrohre (6, 8; 6a, 6b; 8a, 8b) von einer Seite des Einlasssammlers (2; 2a, 2b) ausgehen.

8. Brennkraftmaschine nach einem der Ansprüche 1 bis 6, **dadurch gekennzeichnet, dass** die Eintritte (7, 9; 7a, 7b; 9a, 9b) der Einlassrohre (6, 8; 6a, 6b; 8a, 8b) hinsichtlich einer Längsebene (28) des Einlasssammlers (2; 2a, 2b) symmetrisch angeordnet sind.

## Claims

1. An internal combustion engine, comprising at least two groups of cylinders, an inlet system (1) with at least one front pipe (4; 4a, 4b) opening into an inlet collector (2; 2a, 2b), with each cylinder being connected via at least one inlet pipe (6, 8; 6a, 6b; 8a, 8b) with an inlet collector (2; 2a, 2b) common for several cylinders, with the inlet pipe (6, 8; 6a, 6b; 8a, 8b) having an inlet (7, 9; 7a, 7b; 9a, 9b) on the side of the inlet collector, with the flow path within the inlet collector (2; 2a, 2b) between the orifice (5; 5a, 5b) of the front pipe (4; 4a, 4b) and the inlet (7, 9; 7a, 7b; 9a, 9b) into the inlet pipe (6, 8; 6a, 6b; 8a, 8b) being arranged in a similar way for each inlet pipe (6, 8; 6a, 6b; 8a, 8b), with the front pipe (4; 4a, 4b) opening into the inlet collector (2; 2a, 2b) symmetrically to the inlets (7, 9; 7a, 7b; 9a, 9b) in the region of a bottom side (30) facing the cylinders or a longitudinal side (31) or face side, with the inlets (7, 9; 7a, 7b; 9a, 9b) of at least three inlet pipes (6, 8; 6a, 6b; 8a, 8b) being arranged along a circular line (k), with the orifice (5; 5a, 5b) of the front pipe (4; 4a, 4b) being arranged centrally with respect to the inlets (7, 9; 7a, 7b; 9a, 9b) in the region of the center point (M) of the circular line (k) within the inlet collector (2; 2a, 2b), with one inlet collector (2a, 2b) being provided for each group of cylinders, **characterised in that** a front pipe (4a, 4b) opens into each inlet collector (2a, 2b), and that the front pipes (4a, 4b) of different inlet collectors (2a, 2b) are connectible by means of an acoustic switching device (24) formed by a flap, with the acoustic switching device (24) being arranged before the inlet into the inlet collector (2a, 2b) in the region of the front pipes (4a, 4b).

2. An internal combustion engine according to claim 1, **characterised in that** the collecting space of the inlet collector (2; 2a, 2b) is divided at least into an upper and a bottom compartment (12, 14), with the compartments (12, 14) being connectible with each other by means of at least one switching member (20).

3. An internal combustion engine according to claim 2, **characterised in that** the at least inlet pipe (6, 8; 6a, 6b; 8a, 8b) leading to the cylinder originates per cylinder from each compartment (12, 14).

4. An internal combustion engine according one of the claims 1 to 3, **characterised in that** the front pipe (4; 4a, 4b) is also subdivided by at least one separating wall (11) into at least two inlet compartments (13, 15) according to the division of the inlet collector (2; 2a, 2b), with the separating wall (11) of the front pipe (4; 4a, 4b) continuing in the separating wall (11) of the inlet collector (2; 2a, 2b).

5. An internal combustion engine according one of the claims 1 to 4, **characterised in that** at least one inlet pipe (6, 8; 6a, 6b; 8a, 8b) of each cylinder can be switched over between at least two intake lengths.

6. An internal combustion engine according one of the claims 1 to 5, **characterised in that** the inlet collector (2; 2a, 2b) is symmetrically arranged with respect to at least one plane (28).

7. An internal combustion engine according one of the claims 1 to 6, **characterised in that** the inlet pipes (6, 8; 6a, 6b; 8a, 8b) originate from one side of the inlet collector (2; 2a, 2b).

8. An internal combustion engine according one of the claims 1 to 6, **characterised in that** the inlets (7, 9; 7a, 7b; 9a, 9b) of the inlet pipes (6, 8; 6a, 6b; 8a, 8b) are symmetrically arranged with respect to a longitudinal plane (28) of the inlet collector (2; 2a, 2b).

## Revendications

1. Moteur à combustion interne ayant au moins deux groupes de cylindres avec un système d'admission (1) comportant au moins un tube amont (4 ; 4a, 4b) débouchant dans un collecteur d'admission (2 ; 2a, 2b),
* chaque cylindre étant relié par au moins une conduite d'entrée (6, 8 ; 6a, 6b ; 8a, 8b) à un collecteur d'admission (2 ; 2a, 2b) commun à plusieurs cylindres,
* la conduite d'entrée (6, 8 ; 6a, 6b ; 8a, 8b) ayant une entrée (7, 9 ; 7a, 7b ; 9a, 9b) côté collecteur d'admission,
* le chemin de passage dans le collecteur d'admission (2 ; 2a, 2b) entre l'embouchure (5 ; 5a, 5b) du tube amont (4 ; 4a, 4b) et l'entrée (7, 9 ; 7a, 7b ; 9a, 9b) dans la conduite d'admission (6, 8 ; 6a, 6b ; 8a, 8b) étant identique pour chaque conduite d'admission (6, 8 ; 6a, 6b ; 8a, 8b),
* le tube amont (4 ; 4a, 4b) étant symétrique par rapport aux entrées (7, 9 ; 7a, 7b ; 9a, 9b) dans la région d'un côté inférieur (30) tourné vers les cylindres ou d'un côté longitudinal (31) ou du côté avant dans le collecteur d'admission (2 ; 2a, 2b),
* les entrées (7, 9 ; 7a, 7b ; 9a, 9b) d'au moins trois conduites d'entrée (6, 8 ; 6a, 6b ; 8a, 8b) étant installées selon une ligne circulaire (k),
* l'embouchure (5 ; 5a, 5b) du tube amont (4 ; 4a, 4b) étant installée en position centrale par rapport aux entrées (7, 9 ; 7a, 7b ; 9a, 9b) dans la région du centre (M) de la ligne circulaire (k) dans le collecteur d'admission (2 ; 2a, 2b),
* et pour chaque groupe de cylindres, il est prévu un collecteur d'admission (2a, 2b),
moteur à combustion interne **caractérisé en ce que**
* dans chaque collecteur d'admission (2a, 2b) débouche un tube amont (4a, 4b), et
* les tubes amont (4a, 4b) de différents collecteurs d'admission (2a, 2b) sont reliés par une installation acoustique (24) constituée par un volet,
* l'installation acoustique (24) étant en amont de l'entrée dans le collecteur d'admission (2a, 2b) dans la région du tube amont (4a, 4b).

2. Moteur à combustion interne selon la revendication 1,
**caractérisé en ce que**
* la chambre collectrice du collecteur d'admission (2 ; 2a, 2b) est divisée en au moins une partie supérieure et une partie inférieure (12, 14),
* les parties de chambre (12, 14) pouvant être reliées par au moins un organe de commutation (20).

3. Moteur à combustion interne selon la revendication 2,
**caractérisé par**
pour chaque cylindre au moins une conduite d'admission (6, 8 ; 6a, 6b ; 8a, 8b) issue de chaque partie de chambre (12, 14) arrive dans un cylindre.

4. Moteur à combustion interne selon l'une des revendications 1 à 3,
**caractérisé en ce que**
* le tube amont (4 ; 4a, 4b) est également subdivisé par au moins une cloison (11) en au moins deux parties de chambre d'admission (13, 15) selon la répartition du collecteur d'admission (2 ; 2a, 2b),
* la cloison (11) du tube amont (4 ; 4a, 4b) se prolongeant dans la cloison (11) du collecteur d'admission (2 ; 2a, 2b).

5. Moteur à combustion interne selon l'une des revendications 1 à 4,
**caractérisé en ce qu'**
au moins un tube d'admission (6, 8 ; 6a, 6b ; 8a, 8b) de chaque cylindre commute entre au moins deux longueurs d'aspiration.

6. Moteur à combustion interne selon l'une des revendications 1 à 5,
**caractérisé en ce que**
le collecteur d'admission (2 ; 2a, 2b) est symétrique par rapport à au moins un plan (28).

7. Moteur à combustion interne selon l'une des revendications 1 à 6,
**caractérisé en ce que**
les conduites d'admission (6, 8 ; 6a, 6b ; 8a, 8b) partent d'un côté du collecteur d'entrée (2 ; 2a, 2b).

8. Moteur à combustion interne selon l'une des revendications 1 à 6,
**caractérisé en ce que**
les entrées (7, 9 ; 7a, 7b ; 9a, 9b) des conduites d'admission (6, 8 ; 6a, 6b ; 8a, 8b) sont symétriques par rapport au plan longitudinal (28) du collecteur d'admission (2 ; 2a, 2b).
